(19) Europäisches Patentamt
European Patent Office
Office européen des brevets

(11) **EP 4 012 669 B1**

(12) **FASCICULE DE BREVET EUROPEEN**

(45) Date de publication et mention de la délivrance du brevet:
**14.08.2024 Bulletin 2024/33**

(21) Numéro de dépôt: **21210352.7**

(22) Date de dépôt: **25.11.2021**

(51) Classification Internationale des Brevets (IPC):
*G06V 10/98* (2022.01)    *G06V 10/80* (2022.01)
*G06V 40/12* (2022.01)    *G06F 21/32* (2013.01)
*G06T 7/10* (2017.01)

(52) Classification Coopérative des Brevets (CPC):
**G06F 21/32; G06V 10/809; G06V 10/993;
G06V 40/1365**

(54) **PROCÉDÉ ET DISPOSITIF DE SÉLECTION D'UNE IMAGE D'EMPREINTE DIGITALE DANS UNE SEQUENCE D'IMAGES POUR AUTHENTIFICATION OU IDENTIFICATION**

VERFAHREN UND VORRICHTUNG ZUR AUSWAHL EINES FINGERABDRUCKBILDES AUS EINER BILDSEQUENZ ZUR AUTHENTIFIZIERUNG ODER IDENTIFIZIERUNG

METHOD AND DEVICE FOR SELECTING A DIGITAL FINGERPRINT IMAGE IN AN IMAGE SEQUENCE FOR AUTHENTICATION OR IDENTIFICATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.12.2020 FR 2012931**

(43) Date de publication de la demande:
**15.06.2022 Bulletin 2022/24**

(73) Titulaire: **Idemia Identity & Security France
92400 Courbevoie (FR)**

(72) Inventeurs:
• **NIAF, Emilie
92400 COURBEVOIE (FR)**
• **MABYALAHT, Guy
92400 COURBEVOIE (FR)**

(74) Mandataire: **Idemia
2, place Samuel de Champlain
92400 Courbevoie (FR)**

(56) Documents cités:
FR-A1- 3 084 943     US-A1- 2018 107 862
US-A1- 2019 087 636     US-A1- 2019 138 703

# EP 4 012 669 B1

**Description**

DOMAINE TECHNIQUE

L'invention concerne un procédé et dispositif de sélection d'une image d'une empreinte digitale pour identification ou authentification d'un individu. L'image est plus particulièrement sélectionnée dans une séquence d'images acquises par un dispositif de capture d'images.

ETAT DE LA TECHNIQUE ANTERIEURE

L'utilisation d'empreintes digitales, par exemple du type empreinte d'un doigt ou d'une pluralité de doigts permet de sécuriser des accès à des bâtiments ou à des machines. Utiliser cette technologie permet de renforcer la sécurité dans la mesure où la probabilité que deux personnes aient deux empreintes digitales identiques est quasiment nulle.
Un système de capture d'empreintes digitales permet d'obtenir au moins une image d'au moins une empreinte digitale. Dans le cas d'une identification, chaque empreinte est comparée avec un ensemble d'empreintes digitales de référence contenues dans une base de données. Dans le cas d'une authentification, chaque empreinte est comparée à une seule empreinte digitale. La comparaison permet de déterminer si chaque empreinte digitale obtenue appartient ou non à une personne référencée dans 1a base de données ou si la personne est bien celle qu'elle prétend être.
A cet effet, il est connu d'utiliser un équipement mobile, e.g. un téléphone intelligent (« smartphone » en anglais) afin de capturer une ou des empreintes de doigt d'un individu afin de l'identifier ou de l'authentifier. Un système de capture d'empreintes peut être ajouté à l'équipement mobile lors de sa fabrication. Un tel système de capture d'empreintes sur « smartphone » a souvent une surface d'acquisition inférieure à la taille de l'empreinte. Il nécessite donc l'utilisation d'algorithmes de mosaïquage d'images adaptés afin de reconstruire l'empreinte dans son intégralité. Une telle solution est donc coûteuse à mettre en oeuvre. La plupart de ces équipements mobiles étant équipés d'une caméra couleur, le document de Lee et al intitulé « Image Preprocessing of Fingerprint Images Captured with a Mobile Caméra » publié en 2006 dans ICB (« International Conférence on Advances in Biometrics ») suggère d'utiliser directement cette caméra pour développer un système de reconnaissance d'empreintes.
Toutefois, une telle approche pose de nombreux problèmes par rapport aux systèmes classiques de capture d'empreintes. Notamment, les arrière-plans des images de doigt(s) capturées sont très variables (e.g. sol, paysages, etc). La qualité des images acquises est également très variable d'un équipement mobile à un autre. D'autres documents de l'état de la technique antérieure sont:

- US 2019/138703 A1 qui divulgue la réception de M premières images d'empreintes digitales lorsqu'une opération tactile d'un doigt d'un utilisateur sur un module de reconnaissance d'empreintes digitales d'un dispositif terminal est détectée, la réception de N secondes images d'empreintes digitales sur la base de N ensembles de paramètres de contrôle automatique de capacité (CAC) lorsque le doigt de l'utilisateur est dans un état stable, la détermination d'une première image d'empreinte digitale cible et un processus de mise en correspondance sur la première image d'empreinte digitale cible afin de déverrouiller le dispositif terminal,
- FR3 084 943 A1 qui divulgue un procédé d'obtention d'une image d'au moins une empreinte digitale à partir d'une séquence d'images acquises par un capteur d'images,
- US 2019/087636 A1 qui divulgue, sur la base de l'analyse d'indicateurs de qualité, sélectionner une seule trame de données d'empreintes digitales qui répond aux critères à utiliser pour l'identification de l'utilisateur, et
- US 2018/107862 A1 qui divulgue recevoir N images de régions d'empreintes digitales par balayage dans N direction et sélectionner l'une des N images de région d'empreinte digitale en tant qu'image d'empreinte digitale partielle pour déverrouiller un terminal utilisateur.

Il est souhaitable de pallier ces inconvénients de l'état de la technique. Il est notamment souhaitable de proposer un procédé et un dispositif qui permettent d'utiliser tout type de capteurs d'images présents sur les équipements mobiles grand public afin d'acquérir au moins une empreinte digitale de bonne qualité dans une séquence d'images. Par ailleurs, ce procédé doit être d'exécution rapide et utiliser peu de mémoire.

EXPOSE DE L'INVENTION

La présente invention est définie par les revendications annexées.

BREVE DESCRIPTION DES DESSINS

Les caractéristiques de l'invention mentionnées ci-dessus, ainsi que d'autres, apparaîtront plus clairement à

2

la lecture de la description suivante d'un exemple de réalisation, ladite description étant faite en relation avec les dessins joints, parmi lesquels :

[Fig. 1] illustre schématiquement un procédé de sélection d'une image d'une empreinte digitale pour identification ou authentification d'un individu selon un mode de réalisation particulier ;
[Fig. 2] illustre schématiquement un exemple de mise en oeuvre d'une étape de détermination d'une valeur représentative d'une stabilité d'une image selon un mode de réalisation particulier ;
[Fig. 3] illustre schématiquement un procédé d'association de régions entre elles selon un mode particulier de réalisation ;
[Fig. 4] illustre schématiquement un exemple de mise en oeuvre d'une étape de détermination d'une valeur représentative d'une netteté d'une image selon un mode de réalisation particulier ; et,
[Fig. 5] illustre schématiquement un exemple d'architecture matérielle d'un dispositif de sélection d'une image d'une empreinte digitale pour authentification ou identification.

EXPOSE DETAILLE DE MODES DE REALISATION

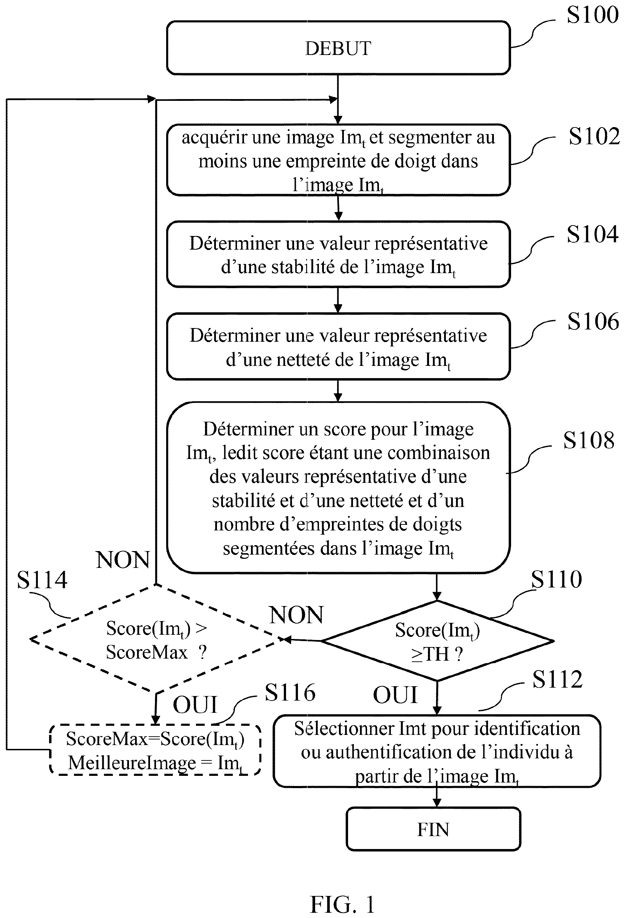

La **Fig. 1** illustre schématiquement un procédé de sélection d'une image d'une empreinte digitale pour identification ou authentification d'un individu, ladite image étant sélectionnée dans une séquence d'images acquises par un dispositif de capture d'images selon un mode de réalisation particulier. Le dispositif de capture d'images est avantageusement une caméra d'un équipement mobile grand public, e.g. un téléphone intelligent, une tablette, un ordinateur fixe ou portable, etc. Dans la suite, les termes « empreinte digitale » et « empreinte de doigt » sont considérés comme des synonymes.

Le procédé démarre à l'étape S100, à un instant t. Lors d'une étape S102, une image $Im_t$ comprenant au moins une empreinte digitale de l'individu est acquise avec un capteur d'images. L'individu positionne sa main devant le capteur de telle sorte que ces empreintes soient visibles, la main étant fixe ou en mouvement. Au moins une empreinte de doigt est segmentée dans l'image $Im_t$ sous la forme d'une région $ROI_n$, n est un indice servant à identifier la région. De manière générale, Nt empreintes de doigt sont segmentées dans ladite image avec Nt entre 1 et 5.

A titre de simples exemples illustratifs, le procédé de segmentation de doigt décrit dans le document de Lee et al intitulé «Preprocessing of a Fingerprint Image Captured with a Mobile Camera », publié en 2006 dans International Conférence on Biometrics (ICB) 348-355, permet d'obtenir des empreintes de doigt segmentées. Le procédé décrit dans le document de Suzuki et al intitulé « Topological structural analysis of digitized binary images by border following » publié en 1985 dans Computer Vision, Graphics, and Image Processing, 30(1):32-46, permet d'obtenir des contours d'empreintes de doigt à partir d'empreintes de doigt segmentées. Le procédé décrit dans le document de Ramer et al intitulé « An itérative procedure for the polygonal approximation ofplane curves » publié en 1972 dans Computer Graphics and Image Processing, 1(3), 244-256, permet d'obtenir des polygones à partir desdits contours d'empreintes de doigt.

Il est à noter cependant que les modes de réalisation décrits ne se limitent à cette seule méthode de segmentation de doigt. D'autres méthodes peuvent être utilisées. Ainsi des méthodes de segmentation basées sur modèles déformables utilisant des courbes paramétriques (e.g. des splines de degré 1) peuvent être utilisées.

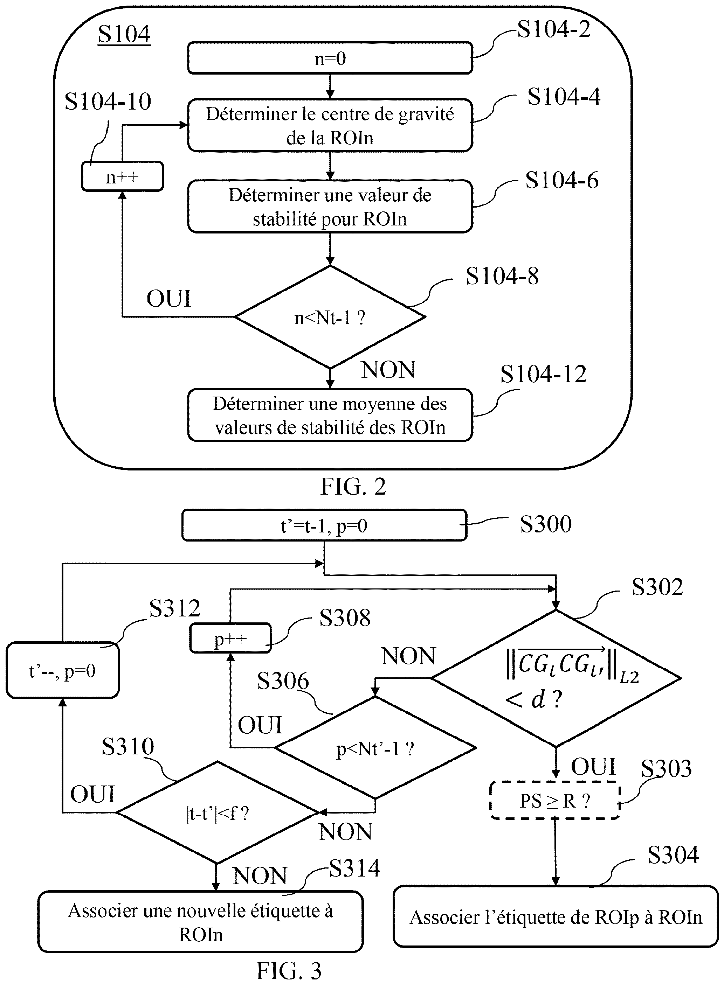

Chaque région $ROI_n$, avec n variant de 0 à Nt-1, est par exemple identifiée à l'aide d'un polygone convexe de m sommets $(x_i, y_i)$ avec m entier et $(x_i, y_i)$ sont les coordonnées d'un sommet d'indice i, i variant de 0 à m, avec $x_0 = x_m$ et $y_0 = y_m$. Les sommets correspondants au bord de l'image ou à la ligne de coupe séparant l'empreinte de doigt de la phalange intermédiaire sont identifiés avec une étiquette spécifique lors de l'étape de segmentation. Lors d'une étape S104, une valeur représentative d'une stabilité de l'image $Im_t$ est déterminée. Un mode particulier de réalisation de l'étape S104 est illustré schématiquement par la Fig. 2.

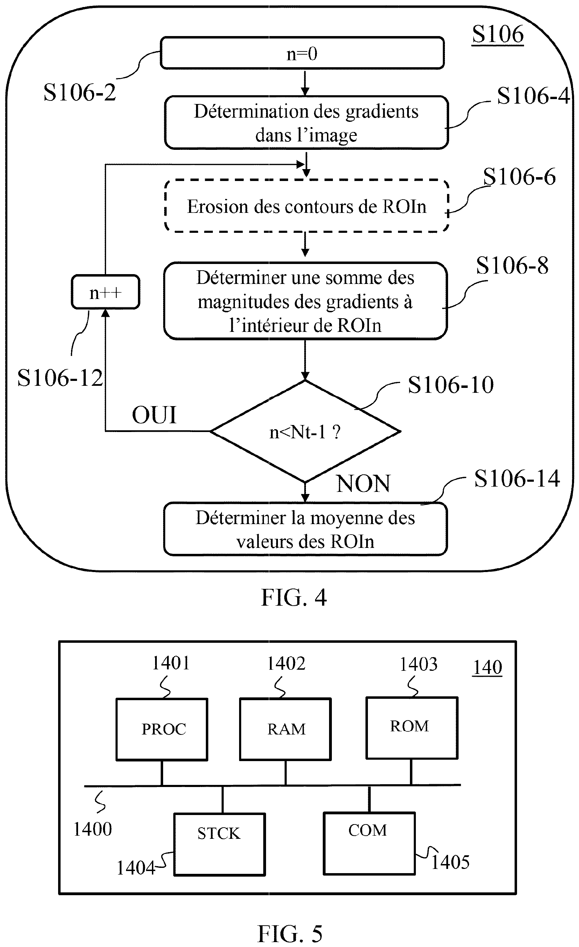

Lors d'une étape S106, une valeur représentative d'une netteté de l'image $Im_t$ est déterminée. Un mode particulier de réalisation de l'étape S106 est illustré schématiquement par la Fig. 4.

Lors d'une étape S108, un score est déterminé pour l'image $Im_t$, le score étant une combinaison des valeurs représentatives de la stabilité et de la netteté et du nombre Nt d'empreintes de doigts segmentées dans l'image $Im_t$. Le score est représentatif de la qualité de l'image. Plus le score est grand, plus la qualité de l'image est élevée et donc meilleure sera une identification/authentification effectuée à partir de cette image. Dans un mode de réalisation, le score Score(Imt) associé à l'image $Im_t$ est calculé comme suit :

$$\text{Score}(Im_t) = fct(\text{Stabilité}(Im_t)) * g(\text{Netteté}(Im_t)) * h(Nt)$$

où fct, g et h sont des fonctions. Par exemple, fct, g et h sont identiques et sont égales à la fonction identité. Dans une variante, $fct(\text{Stabilité}(Im_t)) = \min(THS, \text{Stabilité}(Im_t))$, $g(\text{Netteté}(Imt)) = \min(THN, \text{Netteté}(Imt))$ et $h(Nt) = \min(THNt, Nt)$ où THS, THN et THNt sont des valeurs de seuil prédéfinies. Par exemple, THS= 0.67, THN= 1500 et THNt=2 Lors d'une étape S110, le score Score(Imt) est comparé à une valeur de seuil TH. Par exemple, TH = THS*THN*THNt. La valeur TH est fixée en fonction d'un compromis qualité d'image versus vitesse d'exécution du procédé. Si le score associé à l'image $Im_t$ est supérieur ou égal à TH, alors l'image est considérée comme de suffisamment bonne qualité pour être sélectionnée lors d'une étape S112 aux fins d'identification/authentification de l'individu auquel elle appartient. Dans le cas contraire, i.e. Score(Imt) < TH, le procédé reprend à l'étape S102 et une nouvelle image est acquise.

Dans une variante de réalisation optionnelle, à chaque itération, la meilleure image acquise jusqu'à présent, i.e. celle dont le score est le plus élevé, est stockée en mémoire. Ainsi, si Score(Imt) < TH, le score Score(Imt) est comparé, lors d'une étape S114, au score le plus élevé obtenu jusqu'à présent et noté ScoreMax. Si Score(Imt)> ScoreMax alors, lors d'une étape S116, ScoreMax est mis égal à Score(Imt) et $Im_t$ est stockée en mémoire comme étant la meilleure image, notée MeilleureImage, pour une identification/authentification.

Le cas échéant, l'image précédemment stockée comme étant la meilleure image est donc supprimée. Dans une autre variante de réalisation optionnelle, à chaque nouvelle itération, la stabilité et donc le score de l'image MeilleureImage est mis à jour en tenant compte d'informations sur la stabilité provenant d'images acquises postérieurement à la meilleure image.

En effet, 1a notion de stabilité pénalise indument certaines images potentiellement nettes et avec des empreintes de doigt correctement segmentées. Par exemple, dans une suite de *n* images parfaitement stables $Im_t$, $Im_{t+1}$, ... . $Im_{t+n}$, à nombre d'empreintes de doigt segmentées égal et mesure de netteté égale, le score de la dernière image Score($Im_{t+n}$) est plus grand que Score(Imt) car la valeur représentative d'une stabilité est plus élevée pour l'image $Im_{t+n}$ que pour l'image $Im_t$. Or il s'agit des mêmes images. La mise à jour du score de la meilleure image à chaque itération en tenant compte d'informations sur la stabilité provenant d'images acquises postérieurement à la meilleure image permet de compenser cet effet. Soit une séquence d'images $Im_0$, $Im_1$,... $Im_{t'}$, ..., $Im_t$ acquise par le capteur d'images. Soit $Im_{t'}$ la meilleure image courante qui a été acquise à l'instant t'. Sa valeur de stabilité est mise à jour en tenant compte des informations sur la stabilité d'images acquises postérieurement à t'.

Le score de $Im_{t'}$ après la mise à jour, est à nouveau comparé à TH. Si le score mis à jour est supérieur à TH alors le procédé continue à l'étape S112 avec $Im_{t'}$. Cette approche permet de diminuer le temps moyen de sélection d'une image pour identification /authentification puisque le score Score($Im_{t'}$) mis à jour est potentiellement plus élevé qu'avant la mise à jour et peut égaler ou dépasser le seuil TH.

Dans un mode particulier de réalisation, la mise à jour de la stabilité et donc du score de l'image $Im_t$, (la meilleure image courante) est effectuée même dans le cas où le score associé à l'image $Im_t$ est supérieur ou égal à TH. En effet, il est possible que suite à cette mise à jour, le score de l'image $Im_t$, soit finalement supérieur au score de l'image $Im_t$ et donc à TH. Dans ce cas, il est préférable de sélectionner l'image $Im_t$, qui est de meilleure qualité que l'image $Im_t$.

Dans un autre mode particulier de réalisation, un critère d'arrêt supplémentaire est utilisé lors de l'étape S110. Si le nombre d'images acquises est supérieur à une valeur de seuil alors MeilleureImage est sélectionnée pour identification ou authentification de l'individu. Ainsi, au bout d'un certain temps d'acquisition, si aucune image n'a été trouvée avec un Score supérieur à TH, la meilleure image qui est stockée en mémoire est utilisée.

La **Fig. 2** illustre schématiquement un exemple de mise en oeuvre de l'étape S104. L'étape S104 démarre (S104-2) avec n=0. Il s'agit d'une simple convention.

Lors d'une étape S104-4, le centre de gravité de la région $ROI_n$ est déterminé. Les coordonnées (cx, cy) du centre de gravité sont par exemple déterminées comme suit :

$$c_x = \frac{1}{6*A} \sum_{i=0}^{m-1} (x_i + x_{i+1}) * ( x_i * y_{i+1} - x_{i+1} * y_i)$$

$$c_y = \frac{1}{6*A} \sum_{i=0}^{m-1} (y + y_{i+1}) * ( x_i * y_{i+1} - x_{i+1} * y_i)$$

où :

$$A = \frac{1}{2}\sum_{i=0}^{m-1}(x_i * y_{i+1} - x_{i+1} * y_i),$$

xm=x0 et ym=y0.

Lors d'une étape S104-6, une valeur de stabilité est déterminée pour la région $ROI_n$. La valeur de stabilité pour la région $ROI_n$ de l'image $Im_t$ est égale à un pourcentage d'occurrences, dans F images précédant l'image $Im_t$, d'une

étiquette qui lui est associée, F étant un entier positif représentant un nombre d'images. F est proportionnel à la fréquence image fps, e.g. F=0.8*fps. Par exemple, F=20 quand fps est égal à 25 images par seconde. A cet effet, la région $ROI_n$ est comparée avec des régions segmentées $ROI_p$ dans f images $Im_t$, qui la précèdent, f étant un entier positif représentant un nombre d'images, e.g. f=5 pour une fréquence de 25 images par secondes. Plus généralement, f est proportionnel à la fréquence image, e.g. f=0.2*fps. Cette étape a pour objectif d'associer à la région $ROI_n$ une étiquette d'une région déjà étiquetée précédemment en tenant compte d'un critère de proximité spatiale ou le cas échéant à associer une nouvelle étiquette dans le cas où ce critère de proximité spatiale n'est vérifié avec aucune région des images précédentes. Cette étape est illustrée sur la **Fig. 3.** La valeur t' est initialisée (S300) à la valeur t-1 et p à la valeur 0.

Lors d'une étape S302, une distance spatiale entre les régions $ROI_n$ et $ROI_p$ est comparée à un seuil d. A titre d'exemple la distance spatiale est égale à la distance euclidienne $\|\overrightarrow{CG_{n,t}CG_{p,t'}}\|_{L2}$ où $CG_{n,t}$ est le centre de gravité de la région $ROI_n$ dans l'image Imt et $CG_{p,t'}$ est le centre de gravité de la région $ROI_p$ dans l'image $Im_{t'}$ précédant l'image $Im_t$. D'autre distances peuvent être utilisées.

Par exemple, d=100 pour des images de taille 2000x2000 pixels. Ce critère de proximité permet de vérifier que la région $ROI_n$ n'a pas trop dérivé entre l'instant t' et l'instant t.

Si $\|\overrightarrow{CG_{n,t}CG_{p,t'}}\|_{L2} < d$ alors la région $ROI_n$ dans l'image $Im_t$ est associée à la région $ROI_p$ dans l'image $Im_{t'}$, i.e. que l'étiquette de $ROI_p$ est associée à $ROI_n$ (étape S304). La région $ROI_p$ aura, le cas échéant, été associée à une région $ROI_q$ dans une image $Im_{t''}$ qui précède Imt'. Toutes les régions ainsi associées entre elles auront la même étiquette, une étiquette étant créée lors de la première occurrence.

Dans un mode de réalisation particulier, si $\|\overrightarrow{CG_{n,t}CG_{p,t'}}\|_{L2} < d,$ l'orientation de la région $ROI_n$ dans l'image $Im_t$ est comparée à l'orientation de la région $ROI_p$ dans l'image $Im_{t'}$. A cet effet, un vecteur directeur est déterminé pour chacune des deux régions. Ce vecteur directeur est défini par le centre de gravité de la région et le point central de la ligne de coupe définissant le bas de la région lors de l'étape de segmentation. Dans le cas où le produit scalaire PS des deux vecteurs directeurs est supérieur à un seuil prédéterminé R (étape S303), la région $ROI_n$ dans l'image $Im_t$ est associée à la région $ROI_p$ dans l'image $Im_{t'}$, i.e. que l'étiquette de $ROI_p$ est associée à $ROI_n$. Si le produit scalaire est inférieur à R, alors les deux régions ne sont pas associées. On choisira par exemple R $\geq 0$ ou selon un autre exemple R$\geq 0,5$. Par exemple, quand R = 0, si le produit scalaire est positif ou nul, la région $ROI_n$ dans l'image $Im_t$ est associée à la région $ROI_p$ dans l'image $Im_{t'}$, i.e. que l'étiquette de $ROI_p$ est associée à $ROI_n$. Si le produit scalaire est négatif alors les deux régions ne sont pas associées. Ceci a notamment pour effet d'éliminer d'éventuelles fausses détections d'objets situés en arrière-plan.

Si $\|\overrightarrow{CG_{n,t}CG_{p,t'}}\|_{L2} \geq d,$ la région $ROI_n$ est comparée à une autre région de l'image $Im_{t'}$ s'il en existe encore une non testée jusqu'à présent. Ainsi, si p<N1' -1 (étape S306) alors p est incrémenté de 1 (étape S308) et le procédé reprend à l'étape S302 avec la nouvelle région $ROI_p$ de l'image $Im_t$.

Sinon, i.e. si p$\geq$ Nt'-1 (étape S306), alors si |t-1'|<f (étape 5310), la valeur t' est décrémentée de 1 et p est mis à 0 (étape S312). Le procédé reprend à l'étape S302 avec la nouvelle région $ROI_p$ dans la nouvelle image $Im_{t'}$. Sinon, i.e. si |t-t'|$\geq$f (étape S310), le procédé continue à l'étape S314. A l'étape S314, une nouvelle étiquette est créée et associée à la région $ROI_n$ à laquelle pourront être associées des régions dans des images qui suivent $Im_t$. En effet, dans ce cas aucune région segmentée dans les f images qui la précède n'est proche au sens du critère prédéfini de la région $ROI_n$ de l'image $Im_t$. Dans un mode particulier de réalisation, une méthode Hongroise est utilisée pour garantir que plusieurs $ROI_n$ de l'image courante ne soient pas associées à une $ROI_p$ d'une image précédente et inversement, et que ces associations soient optimales au sens de la distance entre centres de gravité. Le document de Kuhn intitulé "The Hungarian Methodfor the assignment problem" et publié en 1955 dans Naval Research Logistics Quarterly, 2: 83-97, décrit cette méthode qui permet de trouver un couplage optimal de poids maximum (respectivement minimum) dans un graphe biparti dont les arêtes sont valuées.

La valeur de stabilité $S_n$ pour la région $ROI_n$ de l'image $Im_t$ est égale à un pourcentage d'occurrences, dans F images précédant l'image $Im_t$, de l'étiquette qui lui est associée.

Ainsi, pour la région $ROI_n$ de $Im_t$, $$S_n = \frac{Nb\_occurrence}{F}$$ où Nb_occurrence est le nombre de fois où l'étiquette associée à $ROI_n$ est associée à une région dans les F images qui précèdent $Im_t$.

De retour à la figure 2, lors d'une étape S 104-8, n est comparé à Nt-1. Si n<Nt-1, n est incrémenté de 1 lors d'une étape S 104-10. Sinon, le procédé continue à l'étape S 104-12. Lors de l'étape S104-12, une valeur représentative d'une stabilité de l'image $Im_t$ est déterminée. Elle est égale à la moyenne des valeurs de stabilité des $ROI_n$ de l'image :

$$S = \frac{1}{Nt} \sum_{n=0}^{Nt-1} S_n \quad (Eq. 1)$$

Dans la variante de réalisation dans laquelle, à chaque nouvelle itération, la stabilité et donc le score de l'image MeilleureImage est mis à jour en tenant compte d'informations sur la stabilité provenant d'images acquises postérieurement à la meilleure image, la valeur de stabilité est mise à jour en tenant compte des occurrences des étiquettes associées à ses régions dans les images suivantes. A cet effet, si la stabilité d'une région $ROI_m$ dans l'image $Im_{t'}$ est inférieure à la stabilité de la région $ROI_p$ dans l'image $Im_t$, la région $ROI_p$ dans l'image $Im_t$ ayant la même étiquette que la région $ROI_m$ dans l'image $Im_{t'}$, la stabilité associée à la région $ROI_m$ dans l'image $Im_{t'}$ est remplacée par la stabilité associée à la région $ROI_p$ dans l'image $Im_t$. Ceci est effectué pour chacune des régions que l'image $Im_{t'}$ partage avec l'image $Im_t$, i.e. deux régions qui ont même étiquette dans les deux images. La stabilité globale de l'image $Im_{t'}$ est mise à jour, i.e. recalculée, en tenant compte des stabilités mises à jour associées aux régions qu'elle comprend.

Soit $Im_{t'}$, la meilleure image courante qui a été acquise à l'instant t'. Pour chaque région présente à la fois dans l'image $Im_{t'}$ et dans l'image $Im_t$ acquise à l'instant courant t, la valeur de stabilité associée à la région $ROI_m$ dans l'image $Im_{t'}$ est mise à jour comme suit :

$$S_m^{update}(t') = \max(S_p(t), S_m(t'))$$

où $S_p(t)$ est la stabilité associée à la région $ROI_p$ dans l'image $Im_t$ ;

$S_m(t')$ est la stabilité associée à la région $ROI_m$ dans l'image $Im_{t'}$; et $S_m^{update}(t')$ est la stabilité associée à la région $ROI_m$ dans l'image $Im_{t'}$ après la mise à jour.

La valeur représentative de la stabilité de MeilleureImage est donc mise à jour en utilisant dans l'équation (Eq.1), les valeurs $S_m^{update}(t')$. Le score est mis à jour en tenant compte de la valeur représentative de la stabilité de MeilleureImage mise à jour.

La **Fig. 4** illustre schématiquement un exemple de mise en oeuvre de l'étape S 106. L'étape S106 démarre (S 106-2) avec n=0, par convention.

Lors d'une étape S106-4, des gradients de l'image sont déterminés. Dans un mode particulier de réalisation, les gradients horizontaux et verticaux sont déterminés. Dans une variante, des gradients dans l'image sont déterminés dans d'autres directions que les directions horizontales et verticales. Des filtres de Sobel sont par exemple utilisés pour déterminer les gradients horizontaux et verticaux.

Les matrices Gx et Gy ci-dessous définissent de tels filtres de Sobel :

$$Gx = \begin{pmatrix} -1 & 0 & 1 \\ -2 & 0 & 2 \\ -1 & 0 & 1 \end{pmatrix} \text{ et } Gy = \begin{pmatrix} 1 & 2 & 1 \\ 0 & 0 & 0 \\ -1 & -2 & -1 \end{pmatrix}$$

Lors d'une étape optionnelle S 106-6, les contours de la régions $ROI_n$ sont érodés de l'ordre d'un facteur alpha de la largeur du doigt en utilisant les segments formés par le centre de gravité (Cx, Cy) déterminé à S104-4 et chacun des points du contour $(xi, yi)_{i=0,m}$ comme axes de régression. Ainsi, chaque point du contour est déplacé sur l'axe qui le relie au centre de gravité de telle sorte que la longueur du segment soit réduite de r, avec r=alpha*1 où 1 est la largeur du doigt dans l'image, alpha ayant par exemple pour valeur 0,25.

Lors d'une étape S106-8, une somme Tn des magnitudes des gradients sur la surface de la région $ROI_n$ est déterminée. Dans une variante, la somme des magnitudes des gradients sur la surface de la région $ROI_n$ après érosion du contour est déterminée. Cette variante permet de déterminer la valeur Tn sur une zone centrale de la région $ROI_n$ et ainsi d'éviter des effets de bords. En effet, de forts contrastes entre le fond et le contour du doigt vont induire des contours saillants ce qui va augmenter la somme des magnitudes des gradients.

Tn est par exemple calculée comme suit à partir de la fonction de Tenengrad à partir de $ROI_n$ :

$$Tn = \sqrt{\sum_{(x,y)\in ROIn} (Gx * Imt(x,y))^2 + (Gy * Imt(x,y))^2}$$

où * est l'opérateur de convolution.

Tn est par exemple calculée comme suit à partir de la fonction de Tenengrad à partir de $ROI_n$ après érosion :

$$Tn = \sqrt{\sum_{(x,y)\in Erode(ROIn)} (Gx * Imt(x,y))^2 + (Gy * Imt(x,y))^2}$$

Lors d'une étape S106-10, n est comparé à Nt-1. Si n<Nt-1, n est incrémenté de 1 lors d'une étape S106-12. Sinon, le procédé continue à une étape S106-14.

Lors de l'étape S106-14, une valeur T représentative d'une netteté de l'image $Im_t$ est déterminée. Elle est égale à la moyenne des valeurs sommes Tn des $ROI_n$ de l'image :

$$T = \frac{1}{Nt} \sum_{n=0}^{Nt-1} Tn$$

Le procédé décrit est avantageusement utilisé pour accélérer les flux de contrôle d'accès dans les stades et pour lutter contre la fraude et le marché noir de billets. L'individu s'identifie/s'enregistre en amont de l'évènement, e.g. à domicile, par l'intermédiaire de la caméra de son téléphone intelligent qui capture les empreintes de ses doigts. A cet effet, l'utilisateur positionne sa main devant l'objectif (avec ou sans mouvement) de la caméra. Une image est alors sélectionnée en utilisant les procédés décrits en lien avec les Figs 1 à 4. L'image sélectionnée sera utilisée pour son identification. A son arrivée au stade, l'individu est identifié par un capteur d'empreintes dédié. Le capteur d'empreinte dédié vérifie alors si l'empreinte capturée correspond à une empreinte de la base de données. Cette procédure permet donc de fluidifier les flux de spectateurs dans le stade, de s'affranchir de tickets papiers et ainsi pallier la perte éventuelle des tickets.

Le procédé décrit permet d'améliorer de l'ordre de 0 à 7 % les performances en termes de précision de l'identification et de diminuer le temps d'acquisition de l'ordre 40%, avec une augmentation du temps de calcul négligeable. Par ailleurs, le procédé est robuste au changement de module de capture d'images, e.g. au changement de téléphone intelligent.

La **Fig. 5** illustre schématiquement un exemple d'architecture matérielle dispositif 140 de sélection d'une image d'au moins une empreinte de doigt pour authentification ou identification.

Selon l'exemple d'architecture matérielle représenté à la Fig. 5, le dispositif 140 comprend alors, reliés par un bus de communication 1400 : un processeur ou CPU (« Central Processing Unit » en anglais) 1401 ; une mémoire vive RAM (« Random Access Memory » en anglais) 1402 ; une mémoire morte ROM (« Read Only Memory » en anglais) 1403 ; une unité de stockage telle qu'un disque dur ou telle qu'un lecteur de support de stockage, e.g. un lecteur de cartes SD (« Secure Digital » en anglais) 1404 ; au moins une interface de communication 1405 permettant au dispositif 140 d'envoyer ou de recevoir des informations.

Le processeur 1401 est capable d'exécuter des instructions chargées dans la RAM 1402 à partir de la ROM 1403, d'une mémoire externe (non représentée), d'un support de stockage (tel qu'une carte SD), ou d'un réseau de communication. Lorsque le dispositif 140 est mis sous tension, le processeur 1401 est capable de lire de la RAM 1402 des instructions et de les exécuter. Ces instructions forment un programme d'ordinateur causant la mise en oeuvre, par le processeur 1401, de tout ou partie des procédés décrits en relation avec les Figs. 1 à 4.

Les procédés décrits en relation avec les Figs 1 à 4 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais). En général, le dispositif 140 comprend de la circuiterie électronique configurée pour mettre en oeuvre les procédés décrits en relation avec les Figs. 1 à 4.

**Revendications**

1. Un procédé de sélection d'une image d'une empreinte digitale pour identification ou authentification d'un individu, ladite image étant sélectionnée dans une séquence d'images acquises par un module de capture d'images **caractérisé en ce que** le procédé comprend :

   a) acquérir (S102) une image, dite image courante, comprenant au moins une empreinte de doigt avec ledit module de capture d'images et segmenter ladite au moins une empreinte de doigt;
   b) déterminer (5104) une valeur représentative d'une stabilité de ladite image courante à partir de ladite au moins une empreinte de doigt segmentée, comprenant :

   - déterminer une distance entre le centre de gravité de ladite région courante et le centre de gravité d'au moins une région déterminée dans une des f images précédant temporellement ladite image courante, dite région précédente, f étant un entier représentant un nombre d'images, à laquelle est associée une étiquette ;
   - associer ladite étiquette à ladite région courante dans le cas où ladite distance est inférieure à une deuxième valeur de seuil ; et
   - associer une nouvelle étiquette à ladite région courante sinon ;
   - déterminer le pourcentage d'occurrences dans F images précédant ladite image courante de ladite étiquette, F étant un entier représentant un nombre d'images, ladite valeur de stabilité de ladite région courante étant égale audit pourcentage ;

   c) déterminer (S106) une valeur représentative de la netteté de ladite image courante à partir de ladite au moins une empreinte de doigt segmentée ;
   d) déterminer (S108) un score pour ladite image courante, ledit score étant une combinaison de ladite valeur représentative d'une stabilité, de ladite valeur représentative d'une netteté et d'un nombre d'empreintes de doigt segmentées dans ladite image courante ;
   e) sélectionner (S112) ladite image courante pour identification ou authentification dudit individu dans le cas où ledit score est supérieur à une première valeur de seuil et, sinon, stocker en mémoire ladite image courante en tant que meilleure image dans le cas où son score est supérieur à une valeur de meilleur score, ladite valeur de meilleur score étant alors mise égale au score de ladite image courante et répéter les étapes a) à e), dans lequel déterminer (5104) une valeur représentative d'une stabilité de ladite image courante à partir de ladite au moins une empreinte de doigt segmentée comprend :

   - pour chaque empreinte de doigt segmentée, ladite empreinte de doigt étant segmentée sous la forme d'une région, dite région courante :
   - déterminer un centre de gravité de ladite région courante ;
   - déterminer une valeur de stabilité de ladite région courante en fonction d'une distance entre le centre de gravité de ladite région courante et le centre de gravité d'au moins une région déterminée dans une des f images précédant temporellement ladite image courante;
   - déterminer une valeur moyenne desdites valeurs de stabilité déterminées, ladite valeur représentative d'une stabilité de ladite image courante étant égale à ladite valeur moyenne déterminée.

2. Le procédé selon la revendication 1, comprenant en outre :

   - déterminer un vecteur directeur pour chacune des régions courante et précédente :

   un premier vecteur directeur de ladite région courante et un second vecteur directeur de ladite région précédente, un vecteur directeur étant défini par le centre de gravité de la région correspondante et le point central de la ligne de coupe définissant le bas de la région correspondante lors de l'étape de segmentation, l'étape d'associer ladite étiquette à ladite région courante étant dans le cas où en outre un produit scalaire dudit premier vecteur directeur et dudit second vecteur directeur est supérieur à une troisième valeur de seuil ;

3. Le procédé selon la revendication 1 ou 2, dans lequel f=0.2*fps et F=0.8*fps où fps est le nombre d'images par seconde.

4. Le procédé selon l'une des revendications 1 à 3, dans lequel déterminer (S106) une valeur représentative de la netteté de ladite image courante à partir de ladite au moins une empreinte de doigt segmentée comprend :

- déterminer des gradients dans ladite image courante ;
- pour chaque empreinte de doigt segmentée, ladite empreinte de doigt étant segmentée sous la forme d'une région, déterminer une somme des magnitudes des gradients à l'intérieur de ladite région ;
- déterminer une valeur moyenne desdites sommes déterminées, ladite valeur représentative de la netteté de ladite image courante étant égale à ladite valeur moyenne déterminée.

5. Le procédé selon la revendication 4, dans lequel chaque région est érodée préalablement à ladite détermination d'une somme des magnitudes des gradients et dans lequel ladite détermination d'une somme des magnitudes des gradients comprend déterminer une somme des magnitudes des gradients à l'intérieur de ladite région érodée.

6. Le procédé selon l'une des revendications 1 à 5, dans lequel ledit score pour ladite image courante est déterminé selon la formule suivante :

$$\text{Score (Im}_t) = \min(TH1, \text{Stabilité}(Im_t))*\min(TH2, \text{Netteté}(Im_t))*\min(TH3, Nt)$$

où TH1, TH2 et TH3 sont des valeurs de seuil, Stabilité(Imt) est la valeur de stabilité de ladite image courante, Netteté(Imt) est la valeur de netteté de ladite image courante et Nt est le nombre d'empreintes de doigt segmentées dans ladite image courante.

7. Le procédé selon l'une des revendications 1 à 6, dans lequel l'étape e) comprend en outre mettre à jour ladite valeur de meilleur score de ladite image stockée en mémoire en tant que meilleure image en tenant compte de la valeur représentative de la stabilité de ladite image courante ;
et sélectionner ladite image stockée en mémoire en tant que meilleure image pour identification ou authentification dudit individu dans le cas où ladite valeur de meilleur score mise à jour est supérieure à ladite première valeur de seuil et audit score de ladite image courante.

8. Le procédé selon la revendication 7, dans lequel mettre à jour ladite valeur de meilleur score de ladite image stockée en mémoire en tant que meilleure image en tenant compte de la valeur représentative de la stabilité de ladite image courante comprend, pour chaque région que ladite meilleure image partage avec ladite image courante, remplacer la stabilité associée à ladite région dans ladite meilleure image par la stabilité associée à ladite région dans ladite image courante dans le cas où la stabilité associée à ladite région dans ladite image courante est supérieure à la stabilité associée à ladite région dans ladite meilleure image et mettre à jour ladite valeur de meilleur score de ladite meilleure image en tenant compte desdites stabilités remplacées.

9. Un dispositif de sélection d'une image d'une empreinte digitale pour identification ou authentification d'un individu, ledit dispositif de sélection comprenant un module de capture d'images, ladite image étant sélectionnée dans une séquence d'images acquises par ledit module de capture d'images **caractérisé en ce que** le dispositif de sélection comprend de la circuiterie électronique configurée pour :

a) acquérir (S102) une image, dite image courante, comprenant au moins une empreinte de doigt avec ledit module de capture d'images et segmenter ladite au moins une empreinte de doigt ;
b) déterminer (5104) une valeur représentative d'une stabilité de ladite image courante à partir de ladite au moins une empreinte de doigt segmentée, comprenant :

- déterminer une distance entre le centre de gravité de ladite région courante et le centre de gravité d'au moins une région déterminée dans une des f images précédant temporellement ladite image courante, dite région précédente, f étant un entier représentant un nombre d'images, à laquelle est associée une étiquette ;
- associer ladite étiquette à ladite région courante dans le cas où ladite distance est inférieure à une deuxième valeur de seuil ; et
- associer une nouvelle étiquette à ladite région courante sinon ;
- déterminer le pourcentage d'occurrences dans F images précédant ladite image courante de ladite étiquette, F étant un entier représentant un nombre d'images, ladite valeur de stabilité de ladite région courante étant égale audit pourcentage ;

c) déterminer (S106) une valeur représentative de la netteté de ladite image courante à partir de ladite au moins une empreinte de doigt segmentée ;
d) déterminer (S108) un score pour ladite image courante, ledit score étant une combinaison de ladite valeur représentative d'une stabilité, de ladite valeur représentative d'une netteté et d'un nombre d'empreintes de doigt segmentées dans ladite image courante ;

e) sélectionner (S112) ladite image courante pour identification ou authentification dudit individu dans le cas où ledit score est supérieur à une valeur de seuil et, sinon, stocker en mémoire ladite image courante en tant que meilleure image dans le cas où son score est supérieur à une valeur de meilleur score, ladite valeur de meilleur score étant alors mise égale au score de ladite image courante et répéter les étapes a) à e), dans lequel déterminer (S104) une valeur représentative d'une stabilité de ladite image courante à partir de ladite au moins une empreinte de doigt segmentée comprend :

- pour chaque empreinte de doigt segmentée, ladite empreinte de doigt étant segmentée sous la forme d'une région, dite région courante :
- déterminer un centre de gravité de ladite région courante ;
- déterminer une valeur de stabilité de ladite région courante en fonction d'une distance entre le centre de gravité de ladite région courante et le centre de gravité d'au moins une région déterminée dans une des f images précédant temporellement ladite image courante;
- déterminer une valeur moyenne desdites valeurs de stabilité déterminées, ladite valeur représentative d'une stabilité de ladite image courante étant égale à ladite valeur moyenne déterminée.

10. Un produit programme d'ordinateur **caractérisé en ce qu'**il comprend des instructions pour mettre en oeuvre, par un dispositif de sélection d'une image, le procédé selon l'une quelconque des revendications 1 à 8, lorsque ledit programme est exécuté par un processeur dudit dispositif de sélection d'une image.

11. Un support de stockage **caractérisé en ce qu'**il stocke un programme d'ordinateur comprenant des instructions pour mettre en oeuvre, par un dispositif de sélection d'une image, le procédé selon l'une quelconque des revendications 1 à 8, lorsque ledit programme est exécuté par un processeur dudit dispositif de sélection d'une image.

**Patentansprüche**

1. Verfahren zur Auswahl eines Bilds eines Fingerabdrucks zur Identifizierung oder Authentifizierung einer Person, wobei das Bild aus einer Folge von von einem Bilderfassungsmodul erfassten Bildern ausgewählt wird, **dadurch gekennzeichnet, dass** das Verfahren enthält:

a) Erfassen (S102) eines mindestens einen Fingerabdruck enthaltenden, aktuelles Bild genannten Bilds mit dem Bilderfassungsmodul, und Segmentieren des mindestens einen Fingerabdrucks;
b) Bestimmen (S104) eines für eine Stabilität des aktuellen Bilds repräsentativen Werts ausgehend von dem mindestens einen segmentierten Fingerabdruck, enthaltend:

- Bestimmen eines Abstands zwischen dem Schwerpunkt des aktuellen Bereichs und dem Schwerpunkt mindestens eines in einem der f zeitlich vor dem aktuellen Bild befindlichen Bilder bestimmten, vorhergehender Bereich genannten Bereichs, dem ein Label zugeordnet ist, wobei f eine eine Anzahl von Bildern darstellende ganze Zahl ist;
- Zuordnen des Labels zum aktuellen Bereich in dem Fall, in dem der Abstand geringer ist als ein zweiter Schwellwert; und
- sonst Zuordnen eines neuen Labels zum aktuellen Bereich;
- Bestimmen des Prozentsatzes von Vorkommen des Labels in F vor dem aktuellen Bild befindlichen Bildern, wobei F eine eine Anzahl von Bildern darstellende ganze Zahl ist, wobei der Stabilitätswert des aktuellen Bereichs gleich dem Prozentsatz ist;

c) Bestimmen (S106) eines für die Schärfe des aktuellen Bilds repräsentativen Werts ausgehend von dem mindestens einen segmentierten Fingerabdruck;
d) Bestimmen (S108) eines Scores für das aktuelle Bild, wobei der Score eine Kombination des für eine Stabilität repräsentativen Werts, des für eine Schärfe repräsentativen Werts und einer Anzahl von segmentierten Fingerabdrücken im aktuellen Bild ist;
e) Auswahl (S112) des aktuellen Bilds zur Identifizierung oder Authentifizierung der Person in dem Fall, in dem der Score höher ist als ein erster Schwellwert, und sonst Speichern des aktuellen Bilds als bestes Bild in dem Fall, in dem sein Score höher ist als ein bester-Score-Wert, wobei der bester-Score-Wert dann gleich dem Score des aktuellen Bilds gesetzt wird, und Wiederholen der Schritte a) bis e), wobei das Bestimmen (S104) eines für eine Stabilität des aktuellen Bilds repräsentativen Werts ausgehend von dem mindestens einen segmentierten Fingerabdruck enthält:

- für jeden segmentierten Fingerabdruck, wobei der segmentierte Fingerabdruck in Form eines aktueller Bereich genannten Bereichs segmentiert ist:
- Bestimmen eines Schwerpunkts des aktuellen Bereichs;
- Bestimmen eines Stabilitätswerts des aktuellen Bereichs abhängig von einem Abstand zwischen dem Schwerpunkt des aktuellen Bereichs und dem Schwerpunkt mindestens eines in einem der f zeitlich vor dem aktuellen Bild befindlichen Bilder bestimmten Bereichs;
- Bestimmen eines Mittelwerts der bestimmten Stabilitätswerte, wobei der für eine Stabilität des aktuellen Bilds repräsentative Wert gleich dem bestimmten Mittelwert ist.

2. Verfahren nach Anspruch 1, das außerdem enthält:

- Bestimmen eines Richtvektors für jeden der aktuellen und vorhergehenden Bereiche: ein erster Richtvektor des aktuellen Bereichs und ein zweiter Richtvektor des vorhergehenden Bereichs, wobei ein Richtvektor durch den Schwerpunkt des entsprechenden Bereichs und dem Mittelpunkt der Schnittlinie definiert wird, die den unteren Teil des entsprechenden Bereichs im Segmentierungsschritt definiert,

wobei der Schritt des Zuordnens des Labels zum aktuellen Bereich in dem Fall ist, in dem außerdem ein Skalarprodukt des ersten Richtvektors und des zweiten Richtvektors größer ist als ein dritter Schwellwert.

3. Verfahren nach Anspruch 1 oder 2, wobei f=0.2*fps und F=0.8*fps ist, wobei fps die Anzahl von Bildern pro Sekunde ist.

4. Verfahren nach einem der Ansprüche 1 bis 3, wobei das Bestimmen (S106) eines für die Schärfe des aktuellen Bilds repräsentativen Werts ausgehend von dem mindestens einen segmentierten Fingerabdruck enthält:

- Bestimmen von Gradienten im aktuellen Bild;
- für jeden segmentierten Fingerabdruck, wobei der Fingerabdruck in Form eines Bereichs segmentiert ist, Bestimmen einer Summe der Größen der Gradienten im Inneren des Bereichs;
- Bestimmen eines Mittelwerts der bestimmten Summen, wobei der für die Schärfe des aktuellen Bilds repräsentative Wert gleich dem bestimmten Mittelwert ist.

5. Verfahren nach Anspruch 4, wobei jeder Bereich vor der Bestimmung einer Summe der Größen der Gradienten erodiert wird, und wobei die Bestimmung einer Summe der Größen der Gradienten die Bestimmung einer Summe der Größen der Gradienten innerhalb des erodierten Bereichs enthält.

6. Verfahren nach einem der Ansprüche 1 bis 5, wobei der Score für das aktuelle Bild gemäß der folgenden Formel bestimmt wird:

$$\text{Score}(Im_t) = \min(TH1, \text{Stabilität}(Im_t)) * \min(TH2, \text{Schärfe}(Im_t)) * \min(TH3, Nt)$$

wobei TH1, TH2 und TH3 Schwellwerte sind, Stabilität$(Im_t)$ der Stabilitätswert des aktuellen Bilds ist, Schärfe $(Im_t)$ der Schärfewert des aktuellen Bilds ist und Nt die Anzahl von segmentierten Fingerabdrücken im aktuellen Bild ist.

7. Verfahren nach einem der Ansprüche 1 bis 6, wobei der Schritt e) außerdem die Aktualisierung des bester-Score-Werts des als bestes Bild gespeicherten Bilds unter Berücksichtigung des für die Stabilität des aktuellen Bilds repräsentativen Werts enthält;
und Auswahl des als bestes Bild gespeicherten Bilds für die Identifizierung oder Authentifizierung der Person in dem Fall, in dem der aktualisierte bester-Score-Wert höher ist als der erste Schwellwert und als der Score des aktuellen Bilds.

8. Verfahren nach Anspruch 7, wobei die Aktualisierung des bester-Score-Werts des als bestes Bild gespeicherten Bilds unter Berücksichtigung des für die Stabilität des aktuellen Bilds repräsentativen Werts für jeden Bereich, den das beste Bild sich mit dem aktuellen Bild teilt, das Ersetzen der dem Bereich im besten Bild zugeordneten Stabilität durch die dem Bereich im aktuellen Bild zugeordnete Stabilität in dem Fall, in dem die dem Bereich im aktuellen Bild zugeordnete Stabilität größer ist als die dem Bereich im besten Bild zugeordnete Stabilität, und Aktualisieren des bester-Score-Werts des besten Bilds unter Berücksichtigung der ersetzten Stabilitäten enthält.

9. Vorrichtung zur Auswahl eines Bilds eines Fingerabdrucks zur Identifizierung oder Authentifizierung einer Person, wobei die Auswahlvorrichtung ein Bilderfassungsmodul enthält, wobei das Bild aus einer Folge von vom Bilderfassungsmodul erfassten Bildern ausgewählt wird, **dadurch gekennzeichnet, dass** die Auswahlvorrichtung eine elektronische Schaltungsanordnung enthält, die konfiguriert ist, um:

   a) ein aktuelles Bild genanntes Bild, das mindestens einen Fingerabdruck enthält, mit dem Bilderfassungsmodul zu erfassen (S102) und den mindestens einen Fingerabdruck zu segmentieren;
   b) einen für eine Stabilität des aktuellen Bilds repräsentativen Wert ausgehend von dem mindestens einen segmentierten Fingerabdruck zu bestimmen (S104), enthaltend:

   - Bestimmen eines Abstands zwischen dem Schwerpunkt des aktuellen Bereichs und dem Schwerpunkt mindestens eines in einem der f zeitlich vor dem aktuellen Bild befindlichen Bilder bestimmten, vorhergehender Bereich genannten Bereichs, dem ein Label zugeordnet ist, wobei f eine eine Anzahl von Bildern darstellende ganze Zahl ist;
   - Zuordnen des Labels zum aktuellen Bereich in dem Fall, in dem der Abstand geringer ist als ein zweiter Schwellwert; und
   - sonst Zuordnen eines neuen Labels zum aktuellen Bereich;
   - Bestimmen des Prozentsatzes von Vorkommen des Labels in F vor dem aktuellen Bild befindlichen Bildern, wobei F eine eine Anzahl von Bildern darstellende ganze Zahl ist, wobei der Stabilitätswert des aktuellen Bereichs gleich dem Prozentsatz ist;

   c) einen für die Schärfe des aktuellen Bilds repräsentativen Wert ausgehend von dem mindestens einen segmentierten Fingerabdruck zu bestimmen (S106);
   d) einen Score für das aktuelle Bild zu bestimmen (S108), wobei der Score eine Kombination des für eine Stabilität repräsentativen Werts, des für eine Schärfe repräsentativen Werts und einer Anzahl von segmentierten Fingerabdrücken im aktuellen Bild ist;
   e) das aktuelle Bild zur Identifizierung oder Authentifizierung der Person in dem Fall auszuwählen (S112), in dem der Score höher ist als ein Schwellwert, und sonst das aktuelle Bild als bestes Bild in dem Fall zu speichern, in dem sein Score höher ist als ein bester-Score-Wert, wobei der bester-Score-Wert dann gleich dem Score des aktuellen Bilds gesetzt wird, und die Schritte a) bis e) zu wiederholen, wobei das Bestimmen (S104) eines für eine Stabilität des aktuellen Bilds repräsentativen Werts ausgehend von dem mindestens einen segmentierten Fingerabdruck enthält:

   - für jeden segmentierten Fingerabdruck, wobei der segmentierte Fingerabdruck in Form eines aktueller Bereich genannten Bereichs segmentiert ist:
   - Bestimmen eines Schwerpunkts des aktuellen Bereichs;
   - Bestimmen eines Stabilitätswerts des aktuellen Bereichs abhängig von einem Abstand zwischen dem Schwerpunkt des aktuellen Bereichs und dem Schwerpunkt mindestens eines in einem der f zeitlich vor dem aktuellen Bild befindlichen Bilder bestimmten Bereichs;
   - Bestimmen eines Mittelwerts der bestimmten Stabilitätswerte, wobei der für eine Stabilität des aktuellen Bilds repräsentative Wert gleich dem bestimmten Mittelwert ist.

10. Computerprogrammprodukt, **dadurch gekennzeichnet, dass** es Anweisungen enthält, um das Verfahren nach einem der Ansprüche 1 bis 8 durch eine Auswahlvorrichtung eines Bilds durchzuführen, wenn das Programm von einem Prozessor der Auswahlvorrichtung eines Bilds ausgeführt wird.

11. Speicherträger, **dadurch gekennzeichnet, dass** er ein Computerprogramm speichert, das Anweisungen enthält, um das Verfahren nach einem der Ansprüche 1 bis 8 durch eine Auswahlvorrichtung eines Bilds durchzuführen, wenn das Programm von einem Prozessor der Auswahlvorrichtung eines Bilds ausgeführt wird.

**Claims**

1. Method for selecting an image of a fingerprint for identification or authentication of an individual, said image being selected from a sequence of images acquired by an image-capturing module, **characterized in that** the method comprises:

a) acquiring (S102) an image, called the current image, containing at least one fingerprint with said image-capturing module and segmenting said at least one fingerprint;

b) determining (S104) a value representative of a stability of said current image from said at least one segmented fingerprint, this comprising:

- determining a distance between the centre of gravity of said current region and the centre of gravity of at least one determined region in one of the f images temporally preceding said current image, called the preceding region, f being an integer representing a number of images, a label being associated therewith;
- associating said label with said current region in the case where said distance is less than a second threshold value; and
- associating a new label with said current region otherwise;
- determining the percentage of occurrences in F images preceding said current image of said label, F being an integer representing a number of images, said stability value of said current region being equal to said percentage;

c) determining (S106) a value representative of the sharpness of said current image from said at least one segmented fingerprint;

d) determining (S108) a score for said current image, said score being a combination of said value representative of a stability, of said value representative of a sharpness, and of a number of segmented fingerprints in said current image;

e) selecting (S112) said current image for identification or authentication of said individual in the case where said score is greater than a first threshold value and, otherwise, storing said current image in memory by way of best image in the case where its score is greater than a best-score value, said best-score value then being set equal to the score of said current image, and repeating steps a) to e), wherein determining (S104) a value representative of a stability of said current image from said at least one segmented fingerprint comprises:

- for each segmented fingerprint, said fingerprint being segmented into the form of a region, called the current region:
- determining a centre of gravity of said current region;
- determining a stability value of said current region depending on a distance between the centre of gravity of said current region and the centre of gravity of at least one determined region in one of the f images temporally preceding said current image;
- determining an average value of said determined stability values, said representative value of a stability of said current image being equal to said determined average value.

2. Method according to Claim 1, further comprising:

- determining a direction vector for each of the current and preceding regions:

a first direction vector for said current region and a second direction vector for said preceding region, a direction vector being defined by the centre of gravity of the corresponding region and the centre point of the section line defining the bottom of the corresponding region in the segmenting step, the step of associating said label with said current region being in the case where furthermore a scalar product of said first direction vector and of said second direction vector is greater than a third threshold value.

3. Method according to Claim 1 or 2, wherein f=0.2*fps and F=0.8*fps where fps is the number of images per second.

4. Method according to one of Claims 1 to 3, wherein determining (S106) a value representative of the sharpness of said current image from said at least one segmented fingerprint comprises:

- determining gradients in said current image;
- for each segmented fingerprint, said fingerprint being segmented into the form of a region, determining a sum of the magnitudes of the gradients inside said region;
- determining an average value of said determined sums, said value representative of the sharpness of said current image being equal to said determined average value.

5. Method according to Claim 4, wherein each region is eroded before said sum of the magnitudes of the gradients is determined and wherein determining said sum of the magnitudes of the gradients comprises determining a sum of the magnitudes of the gradients inside said eroded region.

6. Method according to one of Claims 1 to 5, wherein said score for said current image is determined according to the following formula:

$$\text{Score } (Im_t) = \min(\text{TH1}, \text{Stability}(Im_t))*\min(\text{TH2}, \text{Sharpness}(Im_t))*\min(\text{TH3}, Nt)$$

where TH1, TH2 and TH3 are threshold values, Stability(Imt) is the stability value of said current image, Sharpness(Imt) is the sharpness value of said current image, and Nt is the number of segmented fingerprints in said current image.

7. Method according to one of Claims 1 to 6, wherein step e) further comprises updating said best-score value of said image stored in memory by way of best image to reflect the value representative of the stability of said current image; and selecting said image stored in memory by way of best image for identification or authentication of said individual in the case where said updated best-score value is greater than said first threshold value and than said score of said current image.

8. Method according to Claim 7, wherein updating said best-score value of said image stored in memory by way of best image to reflect the value representative of the stability of said current image comprises, for each region that said best image shares with said current image, replacing the stability associated with said region in said best image by the stability associated with said region in said current image in the case where the stability associated with said region in said current image is greater than the stability associated with said region in said best image and updating said best-score value of said best image to reflect said replaced stabilities.

9. Device for selecting an image of a fingerprint for identification or authentication of an individual, said selecting device comprising an image-capturing module, said image being selected from a sequence of images acquired by said image-capturing module, **characterized in that** the selecting device comprises electronic circuitry configured to:

   a) acquire (S102) an image, called the current image, containing at least one fingerprint with said image-capturing module and segment said at least one fingerprint;
   b) determine (S 104) a value representative of a stability of said current image from said at least one segmented fingerprint, this comprising:

   - determining a distance between the centre of gravity of said current region and the centre of gravity of at least one determined region in one of the f images temporally preceding said current image, called the preceding region, f being an integer representing a number of images, a label being associated therewith;
   - associating said label with said current region in the case where said distance is less than a second threshold value; and
   - associating a new label with said current region otherwise;
   - determining the percentage of occurrences in F images preceding said current image of said label, F being an integer representing a number of images, said stability value of said current region being equal to said percentage;

   c) determining (S 106) a value representative of the sharpness of said current image from said at least one segmented fingerprint;
   d) determining (S 108) a score for said current image, said score being a combination of said value representative of a stability, of said value representative of a sharpness, and of a number of segmented fingerprints in said current image;
   e) selecting (S 112) said current image for identification or authentication of said individual in the case where said score is greater than a threshold value and, otherwise, storing said current image in memory by way of best image in the case where its score is greater than a best-score value, said best-score value then being set equal to the score of said current image, and repeating steps a) to e), wherein determining (S104) a value representative of a stability of said current image from said at least one segmented fingerprint comprises:

   - for each segmented fingerprint, said fingerprint being segmented into the form of a region, called the current region:
   - determining a centre of gravity of said current region;

- determining a stability value of said current region depending on a distance between the centre of gravity of said current region and the centre of gravity of at least one determined region in one of the f images temporally preceding said current image;
- determining an average value of said determined stability values, said representative value of a stability of said current image being equal to said determined average value.

10. Computer program product, **characterized in that** it comprises instructions for implementing, by means of an image-selecting device, the method according to any one of Claims 1 to 8, when said program is executed by a processor of said image-selecting device.

11. Storage medium, **characterized in that** it stores a computer program comprising instructions for implementing, by means of an image-selecting device, the method according to any one of Claims 1 to 8, when said program is executed by a processor of said image-selecting device.

FIG. 1

S104

n=0 — S104-2

S104-10

Déterminer le centre de gravité de la ROIn — S104-4

n++

Déterminer une valeur de stabilité pour ROIn — S104-6

OUI

n<Nt-1 ? — S104-8

NON

S104-12

Déterminer une moyenne des valeurs de stabilité des ROIn

## FIG. 2

t'=t-1, p=0 — S300

S312

S308

S302

p++

t'--, p=0

NON

$\left\| \overrightarrow{CG_t CG_{t'}} \right\|_{L2} < d\ ?$

S306

OUI

S310

OUI

p<Nt'-1 ?

OUI

PS ≥ R ? — S303

|t-t'|<f ?

NON

S304

NON — S314

Associer une nouvelle étiquette à ROIn

Associer l'étiquette de ROIp à ROIn

## FIG. 3

S106

n=0

S106-2

Détermination des gradients dans l'image

S106-4

Erosion des contours de ROIn

S106-6

n++

Déterminer une somme des magnitudes des gradients à l'intérieur de ROIn

S106-8

S106-12

OUI

n<Nt-1 ?

S106-10

NON

S106-14

Déterminer la moyenne des valeurs des ROIn

FIG. 4

1401          1402          1403          140

PROC          RAM          ROM

1400

STCK          COM

1404          1405

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019138703 A1
- FR 3084943 A1
- US 2019087636 A1
- US 2018107862 A1

**Littérature non-brevet citée dans la description**

- **LEE et al.** Image Preprocessing of Fingerprint Images Captured with a Mobile Caméra. *ICB (« International Conférence on Advances in Biometrics,* 2006
- **LEE et al.** Preprocessing of a Fingerprint Image Captured with a Mobile Camera. *International Conférence on Biometrics (ICB),* 2006
- **SUZUKI et al.** Topological structural analysis of digitized binary images by border following. *Computer Vision, Graphics, and Image Processing,* 1985, vol. 30 (1), 32-46
- **RAMER et al.** An itérative procedure for the polygonal approximation of plane curves. *Computer Graphics and Image Processing,* 1972, vol. 1 (3), 244-256
- **KUHN.** The Hungarian Method for the assignment problem. *Naval Research Logistics Quarterly,* 1955, vol. 2, 83-97